# EUROPEAN PATENT APPLICATION

(11) **EP 1 623 785 A1**
(43) Date of publication of application: **08.02.2006**
(21) Application number: 05012289.4
(22) Date of filing: 08.06.2005
(51) Int. Cl.: B23H 1/08

(54) **Use of an ester of a fatty acid as dielectric fluid for electrical discharge machining.**

(30) Priority: 06.07.2004 IT TO20040456
(71) Applicant: Ruggenini, Paolo, 10073 Cirie' (Torino) (IT); Rabino, Flavio, 14018 Montaldo Scarampi (Asti) (IT)
(72) Inventor: Ruggenini, Paolo, 10073 Cirie' (Torino) (IT); Rabino, Flavio, 14018 Montaldo Scarampi (Asti) (IT)
(74) Representative: Lotti, Giorgio

(57) **Abstract**

The present invention regards use in electrical-discharge machines (EDMs) of specific high-efficiency dielectric fluids with a base of methyl and ethyl esters of fatty acids. Methyl and ethyl esters of fatty acids and mixtures thereof find application in electrical-discharge-machining processes as high-performance dielectric fluids also in association with traditional hydrocarbon-based dielectric fluids.

## Description

The present invention relates to high-efficiency dielectric fluids particularly suitable for electrical-discharge machines (EDMs).

In particular, the present invention relates to the use of specific fluids suitable as high-performance dielectric means in the machining of metals using electrical-discharge machines.

The present invention originates in the sector of electrical-discharge machines commonly used in engineering workshops, in particular for making dies.

Said machines are also defined as "nonconventional machines with removal of stock " since they are based upon a physical process that does not entail contact between the tool and the workpiece. Said process was discovered some sixty years ago, following upon a Russian study entitled: "On the use and effect of removal of metal by means of electrical discharges".

The process consists in controlling the destructive effect of a repeated and intermittent series of high-frequency discharges or sparks in a circumscribed region between the tool (which in EDMs is defined as "electrode") and the workpiece. The current that produces the discharges can normally range from 1 A up to 500 A according to the machining operation to be carried out. The duration of the discharges can range from 1 µs to 2 µs. The potential difference between the electrode and the workpiece can range between 60 V and 300 V.

In order for the process to take place, it is necessary for the tool and the workpiece to be immersed in a dielectric fluid, which performs various functions. The main functions are electrical insulation, cooling, and flushing away of the electrically eroded metal waste.

Currently, the above task is performed by traditional fluids for electrical-discharge machining, made up of mixtures of alkanes, such as paraffins, isoparaffins, kerosene, and mineral oils in general.

The use of such fluids gives rise to various problems regarding both the productivity and appearance of the finished products and the working environments, as well as the operators themselves. In fact, the aforesaid traditional dielectric materials present rather long machining times, a quality of finishing of the products that is not always acceptable, and points of flammability in the region of about 100-110°C, with the risk of sparking off fires even in normal working conditions. Furthermore, not always are said dielectric fluids totally without benzene and other potentially toxic aromatic hydrocarbons, which, in addition to having an acrid and unpleasant smell, in the long run sensitize the skin of the operators that occasionally come into contact therewith and, if ingested, cause the so-called "chemical pneumonia". These substances present the further drawback of not being completely biodegradable and hence entail high costs for their disposal.

As a result, there is currently felt the need to have available non-traditional types of dielectric fluids that will enable energy saving, in the technical sector of EDMs in an ecosustainable context.

One of the purposes of the present invention is hence to provide high-efficiency dielectric fluids particularly suitable for electrical-discharge machines which will enable improved results to be achieved in terms of machining speed, together with considerable energy saving.

Another purpose of the present invention is to provide new-concept dielectric fluids for EDMs which will present a reduced risk of fire as compared to traditional fluids, will not be evil-smelling, and will enable a use that is practically free from harmful effects on operator health.

Not the least important purpose of the present invention to provide dielectric fluids for EDMs which will minimize wear of the machining electrode.

In the light of the aforesaid purposes and yet further purposes that will emerge more clearly to persons skilled in the branch from the ensuing description, the use of an ester of a fatty acid as dielectric fluid for EDMs is proposed.

Typically, the ester of a fatty acid (R₂-COOR₁) according to the invention has:
i) an (esterified) carboxyl terminal group with an alkyl group (R₁) with 1 to 6 carbon atoms, preferably with 1 or 2 carbon atoms; and
ii) a saturated or unsaturated hydrocarbon chain (R₂) comprising a number of carbon atoms comprised between 2 and 60, preferably between 8 and 40, still more preferably between 12 and 24.

Within the context of the present invention, it is also possible to use mixtures of one or more esters of fatty acids, as described previously.

According to one embodiment of the invention, use is envisaged of a methyl and/or ethyl ester of carboxylic acids, in which:
a) the (esterified) carboxyl group is directly bound to a saturated hydrocarbon radical comprising a number of carbon atoms of between 2 and 60, preferably between 8 and 40, still more preferably between 12 and 24 and mixtures thereof;
b) the (esterified) carboxyl group is directly bound to an unsaturated hydrocarbon radical, i.e. , one with one or more double bonds between the carbon atoms, comprising a number of carbon atoms of between 2 and 60, preferably between 8 and 40, still more preferably between 12 and 24.

By way of example, the group the characteristics of which are further specified under a) comprises methyl and/or ethyl esters of laurylic acid, myristic acid, palmitic acid, stearic acid, hydroxystearic acid, arachidic acid, behenic acid, lignocerinic acid, and mixtures thereof, whilst the group the characteristics of which are further specified under b) comprises methyl and/or ethyl esters of undecylenic acid, oleic acid, elaidinic acid, erucic acid, brassic acid, linolic acid, linolenic acid, ricinoleic acid, and mixtures thereof.

Preferred esters comprise methyl and/or ethyl ester of oleic acid, linolic acid, linolenic acid, erucic acid, ricinoleic acid, and mixtures thereof, the use of oleic acid being particularly preferred. Conveniently, the dielectric fluids according to the present invention can be used as such or in a mixture with one or more traditional dielectric fluids, for example of the "alkane mixture" type.

The dielectric fluids according to the invention can be used with existing machines, without requiring any modification and can be used in amounts suitable for electron-discharge machining and readily quantifiable by a person skilled in the sector, thus providing an immediate technical contribution.

Advantageously, the dielectric fluids according to the invention derive from renewable resources, and typically present points of flammability equal to or higher than 120°C. An increase in the point of flammability of 10°C as compared to commonly used isoparaffins (110°C approx.) in any case entails an adequate reduction in the fire-risk factor.

It has moreover been found that methyl and ethyl esters of fatty acids, particularly ones of vegetable origin, have yielded extraordinary results in terms of removal of machining stock, according to what is specified in the examples and tables given in what follows.

In addition, the application of the fluids according to the present invention in machining of metals using EDMs enables twice the amount of metal to be removed via electron discharge.

The above advantage is surprising given that, in electron-discharge machining, doubling of the removal of metal amounts to halving the machining time, with consequent considerable beneficial effects both in terms of productivity and in terms of energy saving.

The fluids according to embodiments of the invention were tested also in a mixture at 50% with the traditional alkane mixtures, and the gain in terms of removal has been found to be proportional to the amount of ester used. This means that the esters according to the invention and the fluids based upon said esters can be used as additives of traditional fluids to improve their efficiency.

In addition to the aforesaid operating advantages, the use of methyl and ethyl esters of fatty acids in EDMs solves the problem of hypersensitization of the skin of operators.

Conveniently, said esters are then without benzene and other aromatic hydrocarbons and consequently do not cause "chemical pneumonia" if they are ingested, in addition to being highly biodegradable.

The ensuing examples are provided purely by way of illustration of the present invention and are not to be understood as in any way limiting the sphere of protection, as emerges from the attached claims.

### EXAMPLE 1

A comparative test of electron-discharge machining was conducted in the following conditions:

| | |
|---|---|
| Electrode | copper |
| Workpiece | steel |
| Current | 2.8 A |
| On time | 13 µs |
| Off time | 10 µs |
| Erosion depth | 1.2 mm |

### RESULTS OBTAINED

| | TEST 1 | TEST 2 |
|---|---|---|
| Dielectric fluid used | Standard isoparaffin | Methyl ester of a mixture of vegetable fatty acids (at approx. 50% of erucic |
| | | acid) |
| Machining time | 2 h 31 min | 1 h 31 min |
| Delta t | | -52% |
| Roughness [VDI] | 18 | 18 |

From this example, there emerges the extraordinary effect of reduction in the machining time when one of the esters according to the invention is used.

### EXAMPLE 2

In this test some of the operating conditions indicated in Example 1 were varied as follows:

| | |
|---|---|
| Electrode | copper |
| Workpiece | steel |
| Current | 6.0 A |
| On time | 50 µs |
| Off time | 25 µs |
| Erosion depth | 5.0 mm |

### RESULTS OBTAINED

| | TEST 1 | TEST 2 |
|---|---|---|
| Dielectric fluid used | Standard isoparaffin | Methyl ester of a mixture of vegetable fatty acids (at approx. 50% of erucic |
| | | acid) |
| Machining time | 25 min | 11 min 40 sec |
| Delta t | | -53% |
| Roughness [VDI] | 39 | 39 |

Also with the new conditions, the machining time was extraordinarily reduced when the same fluid as that of Example 1 was used.

### EXAMPLE 3

Other operating conditions were employed, and a different ester from the one of the first two examples was used.

| | |
|---|---|
| Electrode | copper |
| Workpiece | steel |
| Current | 6.0 A |
| On time | 50 µs |
| Off time | 25 µs |
| Erosion depth | 5.0 mm |

### RESULTS OBTAINED

| | TEST 1 | TEST 2 |
|---|---|---|
| Dielectric fluid used | Standard isoparaffin | Ethyl ester from rape-seed oil |
| Machining time | 51 min | 41 min 20 sec |
| Delta t | | -19.8% |
| Roughness [VDI] | 25 | 25 |

The use of ethyl ester from rape-seed oil produced a reduction in the machining time of approximately 1/5 as compared to the time deriving from the use of a traditional dielectric fluid.

### EXAMPLE 4

In this test other variations in the operating conditions indicated in Example 1 were introduced:

| | |
|---|---|
| Electrode | copper |
| Workpiece | steel |
| Current | 10.5 A |
| On time | 200 µs |
| Off time | 50 µs |
| Erosion depth | 5.5 mm |

### RESULTS OBTAINED

| | TEST 1 | TEST 2 |
|---|---|---|
| Dielectric fluid used | Standard isoparaffin | Methyl ester of a mixture of vegetable fatty acids (at approx. 50% of erucic acid) |
| Machining time | 59 min | 33 min 36 sec |
| Delta t | | -42.8% |
| Roughness [VDI] | 31 | 31 |

Also in this test condition, the methyl ester approximately halved the machining time.

### EXAMPLE 5

Operating conditions:

| | |
|---|---|
| Electrode | copper |
| Workpiece | steel |
| Current | 24 A |
| On time | 400 µs |
| Off time | 50 µs |
| Erosion depth | 10 mm |

### RESULTS OBTAINED

| | TEST 1 | TEST 2 | TEST 3 |
|---|---|---|---|
| Dielectric fluid used | Standard isoparaffin | Methyl ester of a mixture of vegetable fatty acids (at approx. 50% of erucic acid) | 50 wt% standard isoparaffin 50 wt% ester of Example 1 |
| Machining | 37 min | 17 min | 27 min |
| time | | | 30 sec |
| Delta t | - | -54% | -26% |
| Roughness [VDI] | 41 | 41 | 41 |

Also in these conditions, machining was extraordinarily faster when one of the fluids according to the present invention was used. Using as dielectric fluid a mixture in a weight ratio of 1:1 of the esters of Tests 1 and 2, a reduction in the machining time proportional to the amount of ester used was obtained.

### EXAMPLE 6

In the same conditions (as those of Example 5), in rough machining with a current of 25 A and an on time of 200 µs, the following dielectric fluids were tested:
a) standard isoparaffins
b) methyl ester as per Examples 1, 2, 4, 5
c) ethyl ester as per Example 3
d) commercially available methyl oleate
e) commercially available ester-based fluid used for cutting of metals
f) sunflower oil
g) rape-seed oil

The results are given in the annexed Table 1, in which removal of stock is expressed in mm³/min.

### EXAMPLE 7

Conditions: finishing operation; current: 2.5 A; on time: 100 µs; dielectric fluids tested: as per Example 6.
The results are given in the annexed Table 2, in which removal of stock is expressed in mm³/min.

### EXAMPLE 8

Conditions: semi-finishing operation; current: 4.5 A; on time: 200 µs; dielectric fluids tested: as per Example 6.
The results are given in the annexed Table 3, in which removal of stock is expressed in mm³/min.

From an examination of Tables 1, 2 and 3, it is possible to draw up the following considerations:
a) standard isoparaffins: in all the cases tested the results were inferior to those obtained using the fluids b), d) and e);
b) methyl ester of vegetable fatty acids: this yielded extraordinary results in terms of increase in efficiency in all types of operation (rough machining/finishing/semi-finishing);
c) ethyl ester from rape-seed oil: this yielded excellent results as regards rough machining and finishing; mediocre results as regards semi-finishing;
d) methyl oleate: this yielded excellent results as regards rough machining and semi-finishing; as regards semi-finishing, a 70% increase in removal of stock was obtained as compared to that obtained with fluid a);
e) ester-based cutting fluid: this yielded results on the whole inferior to those obtained with methyl oleate;
f) / g) the results obtained using these vegetable oils directly (which would correspond to subjecting glyceric esters to testing) were considerable only at high currents; their high viscosity created, instead, problems in low-current machining operations.

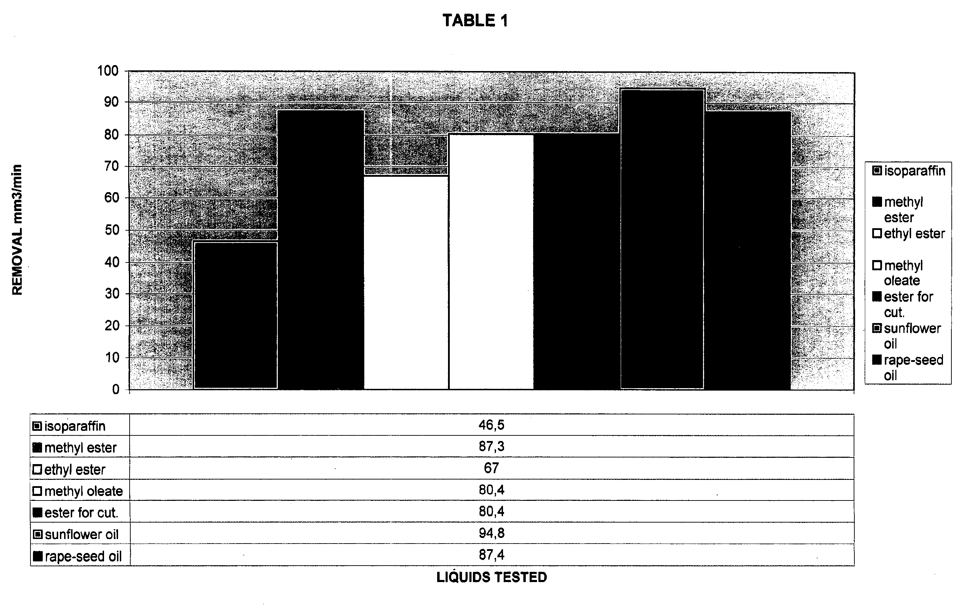

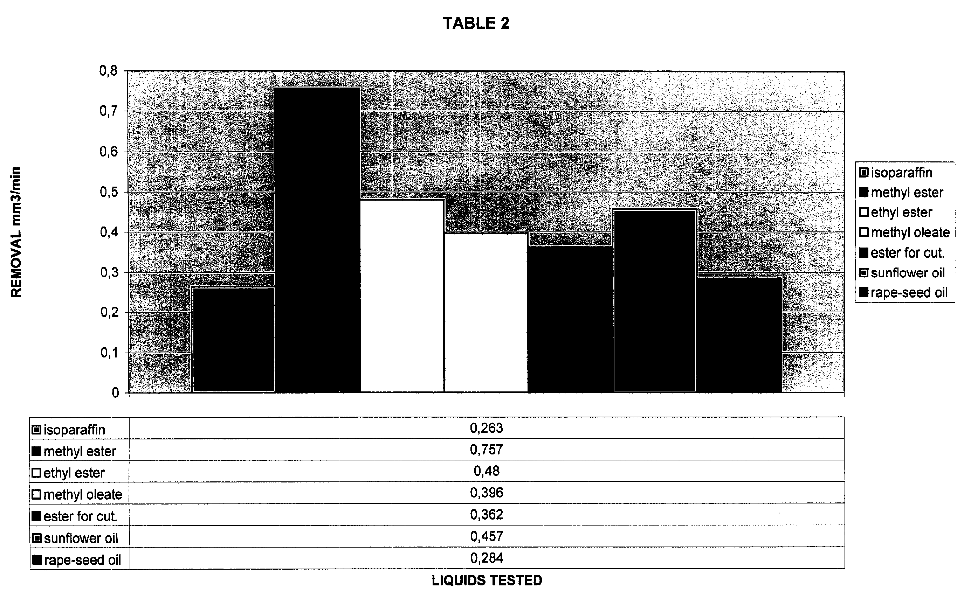

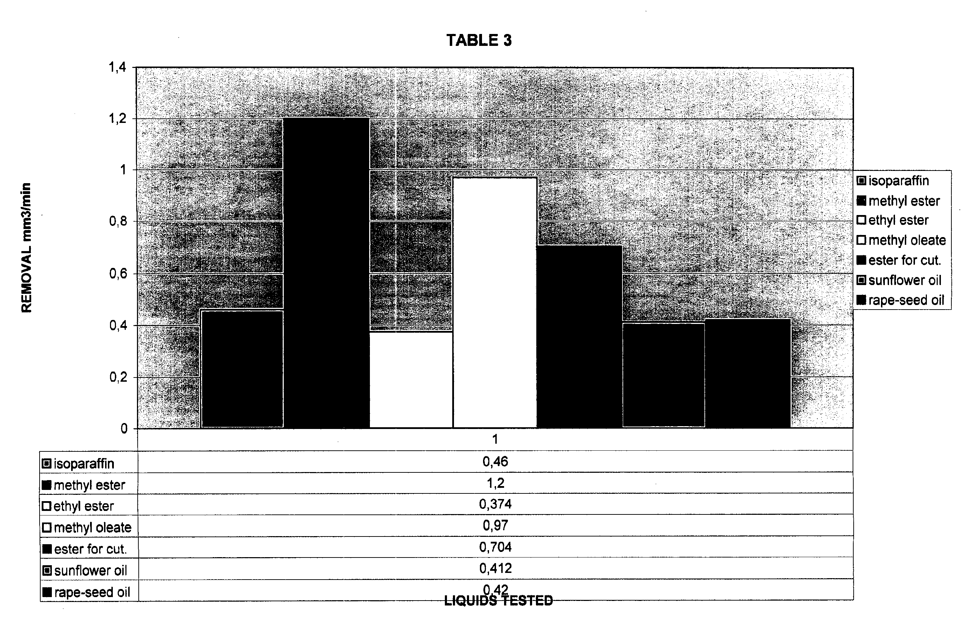

## Claims

1. Use of an ester of a fatty acid as dielectric fluid for electrical-discharge machines (EDMs).

2. Use according to Claim 1, in which said ester of a fatty acid comprises a methyl or ethyl ester of one or more fatty acids and/or mixtures thereof.

3. Use according to Claim 1 or Claim 2, in which said ester of a fatty acid comprises:
i) an esterified carboxyl terminal group with an alkyl radical with 1 to 6 carbon atoms; and
ii) a saturated or unsaturated hydrocarbon chain (R₂) comprising a number of carbon atoms comprised between 2 and 60.

4. Use according to any one of the preceding Claims 1 to 3, in which said ester is a methyl and/or ethyl ester of carboxylic acids in which, alternatively:
a) the (esterified) carboxyl group is directly bound to a saturated hydrocarbon radical comprising a number of carbon atoms of between 2 and 60, and mixtures thereof; or else
b) the (esterified) carboxyl group is directly bound to an unsaturated hydrocarbon radical comprising a number of carbon atoms of between 2 and 60;
and/or said ester is formed by mixtures/derivatives/isomers of methyl and/or ethyl esters of carboxylic acids as further specified in points a) and b).

5. Use according to any one of Claims 1 to 4, in which said hydrocarbon radical comprises a number of carbon atoms of between 8 and 40.

6. Use according to Claim 5, in which said hydrocarbon radical comprises a number of carbon atoms of between 12 and 24.

7. Use according to any one of Claims 4 to 6, in which said hydrocarbon-radical acid is saturated, and said ester of a fatty acid is chosen from the group comprising a methyl and/or an ethyl ester of laurylic acid, myristic acid, palmitic acid, stearic acid, hydroxystearic acid, arachidic acid, behenic acid, lignocerinic acid, and mixtures thereof.

8. Use according to any one of Claims 4 to 6, in which said hydrocarbon-radical acid is unsaturated, and said ester of a fatty acid is chosen from the group comprising a methyl and/or an ethyl ester of undecylenic acid, oleic acid, elaidinic acid, erucic acid, brassic acid, linolic acid, linolenic acid, ricinoleic acid, and mixtures thereof.

9. Use according to Claim 8, in which said ester of a fatty acid is a methyl ester of oleic acid.

10. Use according to any one of Claims 1 to 9, in which said esters of fatty acids have points of flammability equal to or higher than 120°C.

11. Use according to any one of Claims 1 to 10, in which said fatty acids are chosen from among alkyl arylic acids, alkyl cycloalkyl carboxylic acids, and mixtures thereof.

12. Use according to Claim 11, in which said acids are chosen from among resinic acids, tall-oil acids, naphthenic acids, salicylic acids, and mixtures and/or derivatives thereof.

13. Use according to any one of Claims 1 to 12, in which said esters of fatty acids are in a mixture with one or more hydrocarbon-based dielectric fluids.

14. Use according to Claim 13, in which said hydrocarbon-based dielectric fluids are alkanes.
